(19) Europäisches Patentamt
European Patent Office
Office européen des brevets

(11) **EP 3 667 144 B1**

(12) **EUROPÄISCHE PATENTSCHRIFT**

(45) Veröffentlichungstag und Bekanntmachung des Hinweises auf die Patenterteilung:
**21.04.2021   Patentblatt 2021/16**

(51) Int Cl.:
***F16L 25/00*** *(2006.01)*

(21) Anmeldenummer: **19204281.0**

(22) Anmeldetag: **21.10.2019**

(54) **BAUSATZ ZUR HERSTELLUNG EINER VERBINDUNG ZWISCHEN ZWEI VERBUNDROHREN FÜR KLIMA- UND LÜFTUNGSTECHNIK**

KIT FOR PRODUCING A CONNECTION BETWEEN TWO COMPOSITE PIPES FOR AIR-CONDITIONING AND VENTILATION.

ENSEMBLE POUR ÉTABLIR UN RACCORD ENTRE DEUX TUBES COMPOSITE POUR LA CLIMATISATION ET LA VENTILATION.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2018   DE 102018221506**

(43) Veröffentlichungstag der Anmeldung:
**17.06.2020   Patentblatt 2020/25**

(73) Patentinhaber: **Hegler, Ralph Peter**
**97688 Bad Kissingen (DE)**

(72) Erfinder: **Hegler, Ralph Peter**
**97688 Bad Kissingen (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
**EP-A1- 2 233 850     EP-A1- 2 620 683**
**EP-A2- 2 161 486**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Bausatz zur Herstellung einer Verbindung eines ersten Verbundrohres mit einem zweiten Verbundrohr mittels einer Muffe.

Aus der EP 2 431 642 ist ein Verbundrohr der gattungsgemäßen Art bekannt, bei dem einer der beiden großen Seitenwand-Abschnitte eben, d.h. flach, ausgebildet ist. Dieser große Seitenwand-Abschnitt dient als Auflagefläche. Die kleinen Seitenwand-Abschnitte gehen in einen diese beiden verbindenden, gegenüber dem ebenen Seitenwand-Abschnitt angeordneten, balligen, also nach außen gekrümmt ausgebildeten, großen Seitenwand-Abschnitt über. Diese Ausgestaltung führt dazu, dass die Biegbarkeit um die große Achse stark eingeschränkt ist. Dies führt beim Biegen häufig zum Abknicken des Verbundrohres, was wiederum gesonderte Winkelstücke erfordert, wenn das Rohr um einen relativ engen Radius gebogen werden muss. Auch die Biegbarkeit um die kleine Achse ist eingeschränkt, sodass lediglich ein Abbiegen um große Biegeradien möglich ist. Ansonsten müssen ebenfalls zusätzliche Winkelstücke eingesetzt werden. Bei einer Druckbelastung des balligen großen Seitenwand-Abschnitts wölbt sich der flache Seitenwand-Abschnitt nach innen. Dies kann bei Rohrverbindungen zu Undichtheiten führen, da der Kontakt zur Innenkontur des die Rohre verbindenden Elementes, in der Regel also einer Muffe oder eines Winkelstückes, verloren gehen kann. Ein weiterer Nachteil liegt darin, dass nur eine Verlegeposition vorgegeben ist. Diese muss zwingend eingehalten werden, damit die angepassten Befestigungselemente einsetzbar sind, z.B. bei einer Boden- oder Deckenfixierung. Außerdem beeinträchtigt eine ungünstige Teilung der Wellenberge die Biegbarkeit.

Die Schrift EP 2620683 A1 offenbart mit Abbildung 14 einen Bausatz bestehend aus einem Verbundrohr gemäss dem Oberbegriff des Anspruchs 1.

Aus einem Prospekt der FRÄNKISCHE ROHRWERKE Gebr. Kirchner GmbH & Co. KG "Haustechnik" (D.2250/4.10.14.02 HM) ist es bekannt, derartige Verbundrohre mittels eines Dicht- und Verbindungselementes miteinander zu verbinden, das in die jeweiligen Spitzenden zweier Verbundrohre eingesteckt wird und jeweils mittels einer Ring-Dichtung an der Innenwand des entsprechenden Verbundrohres anliegt. Diese im Inneren der beiden miteinander zu verbindenden Verbundrohre anzuordnenden Verbindungselemente verursachen eine Querschnittsreduktion und bilden Absätze im Strömungsquerschnitt. Hierdurch kommt es zu Druckverlusten.

Auch die Reinigung ist problematisch

Eine Verbindung für ein nicht zylindrisches gewelltes Verbund rohr ist aus EP 2233850A1 bekannt.

Eine Verbindung für ein zylindrisches gewelltes Verbund rohr ist aus EP 2161486A1 bekannt.

Der Erfindung liegt die Aufgabe zugrunde, einen Bausatz der gattungsgemäßen Art so auszubilden, dass eine Verbindung zwischen zwei Verbundrohren ermöglicht wird, bei der keine Strömungswiderstände oder Schmutzablagerungsstellen vorhanden sind, wobei eine zuverlässige Abdichtung auch unter äußerer Druckbelastung auf ein Verbundrohr sichergestellt sein soll.

Diese Aufgabe wird erfindungsgemäß bei einem Bausatz nach dem Oberbegriff des Anspruches 1 durch die Merkmale im Kennzeichnungsteil des Anspruches 1 gelöst. Die Ausgestaltung der Verbundrohre führt einerseits zu einer guten Biegbarkeit um beide Achsen. Durch die leicht ballige Ausformung der Auflageflächen, also der großen Seitenwand-Abschnitte, wird ein Beulen nach innen in Richtung des inneren Luftkanals vermieden, sobald eine Druckbelastung benachbart zur Muffe von außen auf das Verbundrohr einwirkt. Durch die konische Ausgestaltung mindestens eines Muffen-Abschnitts der als Doppel-Steck-Muffe ausgebildeten Muffe wird erreicht, dass das jeweilige Spitzende bei einer Druckbelastung des großen Muffenwand-Abschnitts sich nicht in Richtung der kleinen Muffenwand-Abschnitte nach außen ausdehnen kann. Vielmehr werden die großen Muffenwand-Abschnitte nach außen aufgewölbt, da die kleinen Seitenwand-Abschnitte des Spitzendes sich gegen die kleinen Muffenwand-Abschnitte der entsprechend stabil ausgebildeten Muffe abstützen. Die Dichtwirkung der benachbart angeordneten Ring-Dichtung wird also bei einer solchen Druckbelastung vergrößert.

Die Unteransprüche geben zum Teil erfinderische Weiterbildungen an, die die erreichten Effekte unterstützen bzw. verbessern.

Weitere Merkmale, Vorteile und Einzelheiten der Erfindung ergeben sich aus der nachfolgenden Beschreibung eines Ausführungsbeispiels der Erfindung anhand der Zeichnung. Es zeigt:

Fig. 1    ein Verbundrohr aus Kunststoff nach der Erfindung in Draufsicht,

Fig. 2    eine Querschnitts-Darstellung des Verbundrohres entsprechend der Schnittlinie II-II in Fig. 1,

Fig. 3    einen Teil-Längsschnitt durch das Verbundrohr in vergrößerter Darstellung,

Fig. 4    eine Draufsicht auf eine Verbindung zweier Verbundrohre mittels einer Muffe entsprechend dem Sichtpfeil IV in Fig. 5 in teilweise aufgebrochener Darstellung,

Fig. 5    eine Draufsicht auf die Verbindung nach Fig. 4 entsprechend dem Sichtpfeil V in Fig. 4,

Fig. 6    einen Querschnitt durch die Verbindung nach den Fig. 4 und 5 entsprechend den Schnittlinien VI-VI in den Fig. 4 und 5,

Fig. 7 einen Querschnitt durch die Verbindung nach den Fig. 4 und 5 entsprechend den Schnittlinien VII-VII in den Fig. 4 und 5,

Fig. 8 eine vergrößerte Teil-Darstellung aus Fig. 4 entsprechend dem Hinweispfeil VIII in Fig. 4 und

Fig. 9 eine vergrößerte Teil-Darstellung aus Fig. 5 entsprechend dem Hinweispfeil IX in Fig. 5.

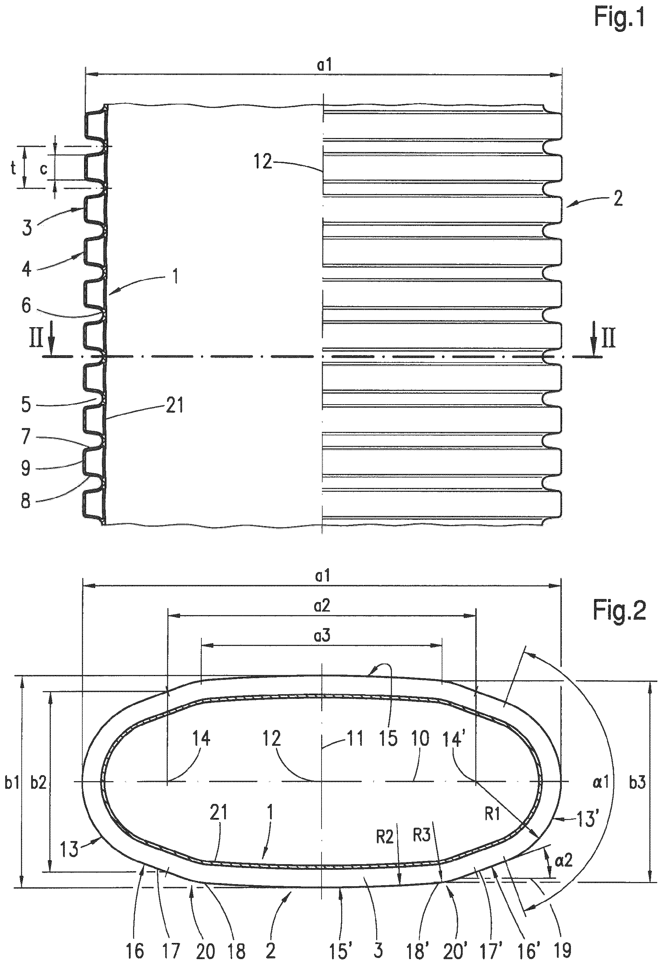

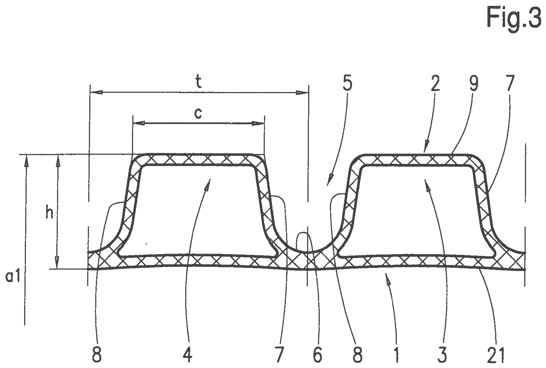

Das in den Fig. 1 bis 3 dargestellte Kunststoff-Rohr ist als Verbundrohr, d. h. als doppelwandiges Wellrohr ausgebildet, das aus einem im Wesentlichen glatten Innenrohr 1 und einem gewellten Außenrohr 2 gebildet ist. Das Außenrohr 2 ist als Wellrohr ausgebildet, d. h. es besteht im Wesentlichen aus aufeinanderfolgenden Wellenbergen 3, 4. Zwischen jeweils zwei einander benachbarten Wellenbergen 3, 4 befindet sich ein Wellental 5, das benachbart zum Innenrohr 1 von einem Wellenfuß 6 begrenzt wird, der die Flanken 7, 8 der benachbarten Wellenberge 3, 4 miteinander verbindet. Der Wellenfuß 6 ist mit dem Innenrohr 1 verschweißt, wie insbesondere aus Fig. 3 hervorgeht. Die Flanken 7, 8 jedes einzelnen Wellenberges 3 bzw. 4 sind durch eine äußere Ringfläche 9 miteinander verbunden. Die Wellenberge 3, 4 samt Wellenfuß 6, Flanken 7, 8 und äußeren Ringflächen 9 bilden das Außenrohr 2.

Das Verbundrohr ist doppeltsymmetrisch ausgebildet und weist in der Querschnittsdarstellung gemäß Fig. 2 zwei senkrecht aufeinanderstehende, sich also senkrecht schneidende Achsen auf, nämlich eine große Achse 10 und eine kleine Achse 11. Sie schneiden sich in der Mittel-Längs-Achse 12 des Rohres. Das Rohr ist im Querschnitt also symmetrisch sowohl zur großen Achse 10 als auch zur kleinen Achse 11 ausgebildet.

Zugeordnet zu den beiden Achsen 10, 11 weist das Rohr einen großen Außen-Durchmesser a1 und einen kleinen Außen-Durchmesser b1 auf. Für das Verhältnis von a1 zu b1 gilt: $1,5 <= a1/b1 <= 3,5$.

Am jeweiligen Ende der großen Achse 10 weist das Rohr zwei einander gegenüberliegende kleine teilkreisförmige Seitenwand-Abschnitte 13, 13' auf. Diese sind symmetrisch zur großen Achse 10 angeordnet und erstrecken sich über einen Winkel $\alpha1$, für den gilt: $30° <= \alpha1 <= 140°$. Die teilkreisförmigen Seitenwand-Abschnitte 13, 13' haben einen Krümmungsradius R1, der am Schnittpunkt mit der großen Achse 10 als dem Mittelpunkt 14, 14' der teilkreisförmigen Seitenwand-Abschnitte 13, 13' beginnt und sich bis zur Ringfläche 9, also dem Außenumfang des Rohres, erstreckt.

An den Enden der kleinen Achse 11 und ebenfalls symmetrisch zu dieser ist das Rohr mit zwei ballig ausgebildeten, also nur leicht gekrümmten großen Seitenwand-Abschnitten 15, 15' versehen, die einen Krümmungsradius R2 aufweisen. Diese großen Seitenwand-Abschnitte 15, 15' bilden die Auflagefläche des Rohres auf einem Untergrund, auf dem das Rohr verlegt wird. Die jeweils einem großen Seitenwand-Abschnitt 15, 15' zugeordneten Krümmungs-Radien R2 schneiden sich auf der kleinen Achse 11 außerhalb des Rohres. Es gilt: $80 >= R2/R1 >= 8$.

Die kleinen teilkreisförmigen Seitenwand-Abschnitte 13, 13' und die großen teilkreisförmigen Seitenwand-Abschnitte 15, 15' sind mittels Übergangs-Abschnitten 16, 16' miteinander verbunden. Diese Übergangs-Abschnitte 16, 16' bestehen jeweils aus einem geradlinigen tangential aus dem kleinen teilkreisförmigen Seitenwand-Abschnitt 13, 13' ausmündenden geradlinigen Teil-Abschnitt 17, 17' und einem Teil-Kreis-Abschnitt 18, 18' mit einem Krümmungs-Radius R3. Der geradlinige Teil-Abschnitt 17, 17' schließt jeweils mit einem parallel zur großen Achse 10 verlaufenden Schenkel 19 einen Winkel $\alpha2$ ein. Es gilt: $2x \alpha2 + \alpha1 = 180°$. Der relativ kleine Teil-Kreis-Abschnitt 18, 18' des Übergangs-Abschnitts 16, 16' geht stetig, also ohne Knickstelle, in den geradlinigen Teil-Abschnitt 17, 17' und in den großen Seitenwand-Abschnitt 15, 15' über. An diesen Übergangsstellen 20, 20' weist das Rohr eine Dicke b3 parallel zur kleinen Achse 11 auf, wobei gilt: $0,99 >= b3/b1 >= 0,92$.

Das Rohr weist in Richtung der großen Achse 10 eine Erstreckung a2 von Mittelpunkt 14 zu Mittelpunkt 14' auf. An den durch das Maß a2 definierten Stellen des Außenumfangs des Rohres, also der Ringfläche 9 der Wellenberge 3, 4, weist das Rohr eine Dicke b2 auf. Diese Dicke b2 ist noch im Bereich des geradlinigen Teil-Abschnitts 17, 17' des Übergangs-Abschnitts 16, 16', wie Fig. 2 entnehmbar ist. Wie ebenfalls Figur 2 entnehmbar ist, weisen die großen Seitenwand-Abschnitte 15, 15' parallel zur großen Achse 10 eine Erstreckung a3 auf.

Für das Verhältnis von b2 zu b1 gilt: $0,4 <= b2/b1 <= 0,9$.

Für das Verhältnis von a3 zu a1 gilt: $0,65 >= a3/a1 >= 0,5$.

Wie aus Fig. 3 hervorgeht, ist die Profilhöhe h von der Innenseite des Rohres 1 bis zur Außenseite der Ringfläche 9 kleiner als die Teilung t von der Mitte des Wellenfußes 6 zur Mitte des benachbarten Wellenfußes 6. Auch die Breite c der Ringfläche 9 des jeweiligen Wellenberges 3, 4 ist bezogen auf die Profilhöhe h verhältnismäßig groß. Es gilt: $c >= h$. Hierdurch wird die Flexibilität, also die Biegbarkeit des Rohres, um die große Achse 10 und die kleine Achse 11 verbessert.

Die Herstellung des Verbundrohres erfolgt in der für gewellte Verbundrohre aus Kunststoff üblichen Art und Weise, wie sie beispielsweise in der EP 0 563 575 C dargestellt und beschrieben ist. Es kann zweckmäßig sein, wenn das Innenrohr 1 aus einem weicher eingestellten Kunststoff gebildet wird als das Außenrohr 2. Weiterhin kann die Innenwand 21 des Innenrohres 1 mit einem Antistatikum ausgerüstet sein, wodurch statische Aufladungen aufgrund der Luftströmung an der Innenwand 21 vermieden werden. Derartige statische Aufladungen können zu Schmutzablagerungen führen. Weiterhin kann das Rohr mit flammhemmenden Additiven ausgerüstet sein, was insbesondere von Vorteil ist, wenn es oberhalb abgehängter Decken verlegt wird.

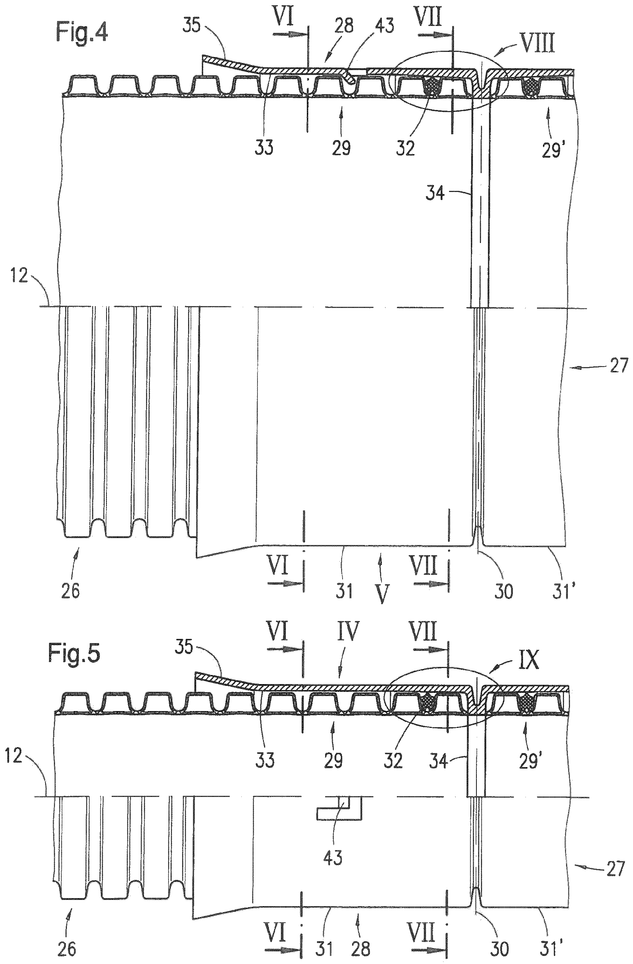

In den Fig. 4 bis 9 sind zwei Verbundrohre 26, 27 dargestellt, die dem zuvor beschriebenen Rohr entsprechen. Aus diesen Zeichnungen ergibt sich insbesondere die Verbindung dieser beiden Rohre 26, 27 mittels eines Verbindungs-Elements in Form einer als Doppel-Steck-Muffe ausgebildeten Muffe 28. In die Muffe 28 werden die beiden Spitzenden 29, 29' der Rohre 26, 27 eingeführt.

Die Mittel-Längs-Achse der Muffe 28 entspricht der zuvor geschilderten Mittel-Längs-Achse 12 der Rohre 26, 27. Die Muffe 28 ist symmetrisch ausgebildet und zwar symmetrisch zu einer zur Mittel-Längs-Achse 12 senkrechten Mittel-Ebene 30. Die Muffe 28 besteht also aus zwei Muffen-Abschnitten 31, 31'. Zwischen dem jeweils voreilenden Wellenberg 3 und dem benachbarten Wellenberg 4 befindet sich eine Ring-Dichtung 32, die einerseits dichtend gegen die Flanken 7, 8 der Wellenberge 3, 4 und andererseits dichtend gegen die Innenwand 33 des jeweiligen Muffen-Abschnitts 31 bzw. 31' anliegt. Derartige Ring-Dichtungen 32 sind beispielsweise aus der EP 1 143 183 A3 bekannt. Jedes Spitzende 29, 29' wird in den entsprechenden Muffen-Abschnitten 31, 31' eingeschoben, bis die voreilende Flanke 7 des ersten Wellenberges 3 sich in der Nähe der Mittel-Ebene 30 befindet. Hier ist ein ringförmig nach innen vorstehender Anschlag 34 in der Muffe 28 ausgebildet, der weiter unten noch genauer beschrieben wird.

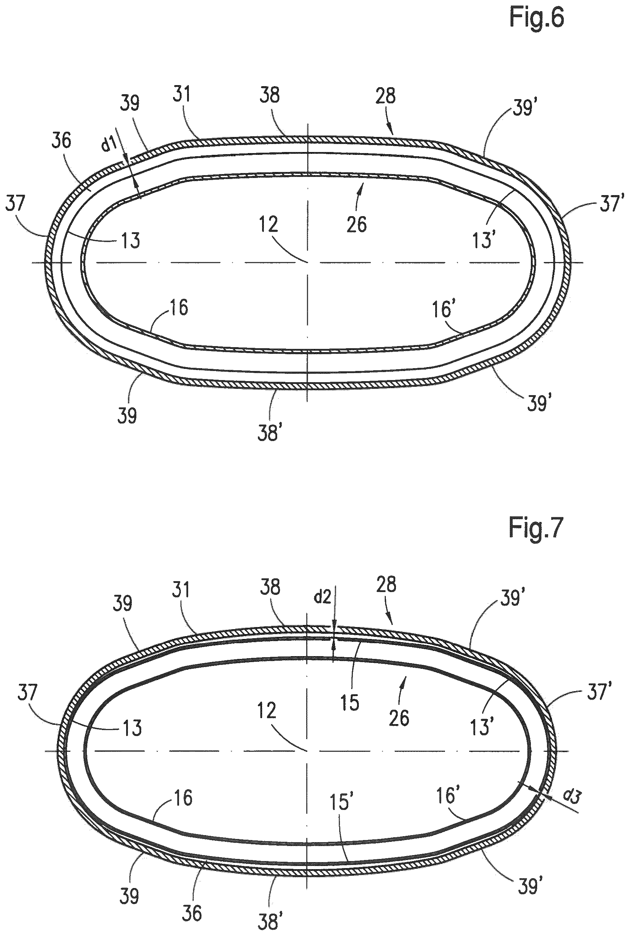

Die Muffen-Abschnitte 31, 31' weisen an ihrem jeweiligen freien Ende, also dem Einführ-Ende für das jeweilige Spitzende 29, 29', einen Einführ-Trichter 35 auf. Im Anschluss daran - im Bereich der Schnittlinie VI-VI in Fig. 4 und 5 - weist der jeweilige Einführ-Trichter 35 gemäß Fig. 6 einen Innenquerschnitt auf, dessen Verlauf dem nach Fig. 2 entspricht, aber derart vergrößert ist, dass ein Spalt 36 zwischen dem Außenumfang des jeweiligen Rohres 26 bzw. 27 und der glatten Innenwand 33 des jeweiligen Muffen-Abschnitts 31, 31' existiert, wobei die Breite d1 des Spaltes 36 über seinen gesamten Umfang im Wesentlichen konstant ist. Der jeweilige Muffen-Abschnitt 31 bzw. 31 ' hat also im Anschluss an den zugehörigen Einführ-Trichter 35 einen Querschnitt, der durch kleine Muffenwand-Abschnitte 37, 37', große Muffenwand-Abschnitte 38, 38' und durch Übergangs-Abschnitte 39, 39' zwischen den jeweiligen kleinen Muffenwand-Abschnitten 37, 37' und den jeweiligen großen Muffenwand-Abschnitten 38, 38' begrenzt wird. Die kleinen Muffenwand-Abschnitte 37, 37' sind also - wie die kleinen Seitenwand-Abschnitte 13, 13' - teilkreisförmig ausgebildet. Für die großen Muffenwand-Abschnitte 38, 38' gilt ebenfalls im Vergleich zu den großen Seitenwand-Abschnitten 15, 15', dass sie gekrümmt, und zwar teilkreisförmig, ausgebildet sind. Die einzelnen Abschnitte 37, 37', 38, 38' und 39, 39' verlaufen also im Wesentlichen parallel zu den entsprechenden Seitenwand-Abschnitten 13, 13', 15, 15' und den Übergangs-Abschnitten 16, 16' der Verbundrohre 26 bzw. 27.

In Richtung zur Mittel-Ebene 30 der Muffe 28 hin verjüngt sich jeder Muffen-Abschnitt 31, 31' entsprechend der Darstellung in Fig. 7 in der Weise, dass die Breite d3 des Spaltes 36 im Bereich der kleinen Muffenwand-Abschnitte 37, 37' deutlich kleiner wird als die Breite d2 des Spaltes 36 im Bereich der großen Muffenwand-Abschnitte 38, 38'. Für die Breiten d1, d2 und d3 des Spaltes 36 gilt also jeweils: d1 > d2 > d3. Weiterhin gilt:

$$0,5mm <= d1 <= 1,5mm$$
$$0,4mm <= d2 <= 1,2mm$$
$$0,0mm <= d3 <= 0,2mm.$$

Da die Muffen 28 üblicherweise im Spritzgießverfahren hergestellt werden, wird zum Entformen des Kerns der Spritzgießform eine Entformungsschräge von ca. 1,0° bis 1,5° benötigt, d.h. die Innenkontur der Muffe ist in Richtung zum Anschlag 34 leicht konisch. Entscheidend ist aber die insoweit überlagerte Konizität der Muffe, die zu den entsprechenden Breiten des jeweiligen Spaltes führt.

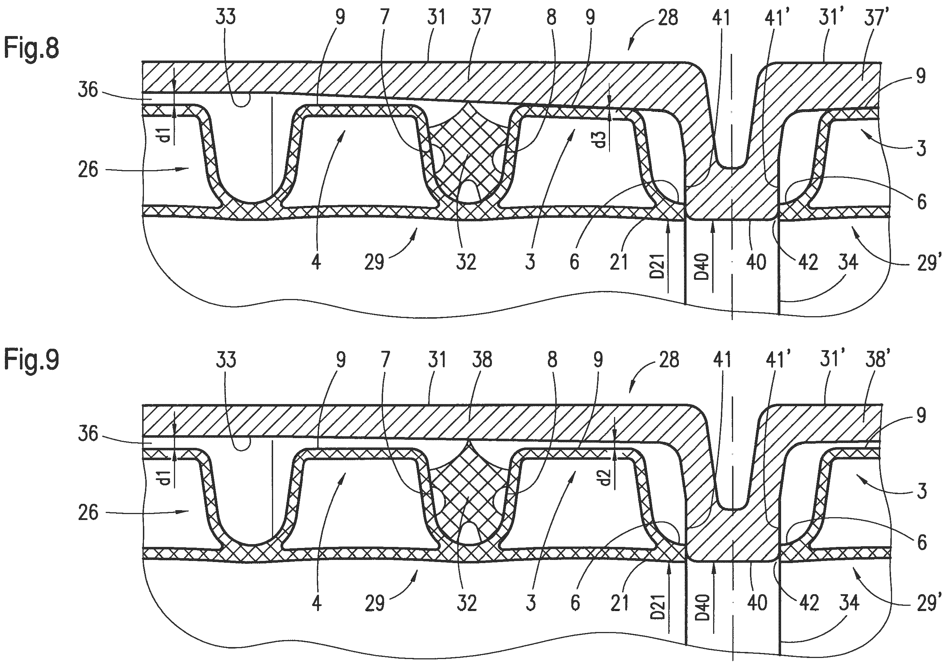

Wie aus Fig. 8 hervorgeht, liegt der voreilende Wellenberg 3 des in die Muffe 28 jeweils eingeschobenen Spitzendes 29 bzw. 29' mit seiner äußeren Ringfläche 9 im Bereich der kleinen Muffenwand-Abschnitte 37, 37' völlig oder nahezu spaltfrei gegen die Innenwand 33 der Muffe 28 an. Die äußere Ringfläche 9 des nächstfolgenden Wellenberges 4 ist im Bereich der kleinen Muffenwand-Abschnitte 37, 37' und entsprechend der kleinen Seitenwand-Abschnitte 13, 13' frei von der Innenwand 33 der Muffe 28. Im Bereich der großen Muffenwand-Abschnitte 38, 38' ist dagegen auch die äußere Ringfläche 9 des voreilenden Wellenberges 3 frei von der Innenwand 33 der Muffe 28, da die Spaltbreite d2 größer ist als die Spaltbreite d3, aber kleiner als die im Wesentlichen konstante Spaltbreite d1 im Anschluss an den Einführ-Trichter 35.

Der ringförmig in der Muffe 28 ausgebildete Anschlag 34 steht radial nach innen vor, wie insbesondere den Fig. 8 und 9 entnehmbar ist. Er weist eine zylindrische innere Umfangsfläche 40 auf, deren Durchmesser D40 gleich dem Innendurchmesser D21 der Innenwand 21 des jeweiligen Verbundrohres 26 bzw. 27 ist. Die Spitzenden 29 bzw. 29' liegen jeweils mit ihrem Wellenfuß 6 an der zugeordneten im Wesentlichen radial zur Mittel-Längs-Achse 12 verlaufenden Seitenwand 41 bzw. 41' des Anschlages 34 an. Weil die Durchmesser D40 und D21 gleich sind und weil die Innenrohre 1 der identisch ausgebildeten Verbundrohre 26, 27 fluchtend miteinander, und zwar insbesondere fluchtend bezüglich ihrer Innenwände 21, angeordnet sind, werden in dem Stoßbereich 42 zwischen den voreilenden Wellenfüßen 6 der Spitzenden 29, 29' und dem Anschlag 34 keine Lücken oder Durchmessersprünge gebildet. An diesem Stoßbereich 42 können also keine Verwirbelungen, Strömungsverluste oder Schmutzablagerungen auftreten.

Durch die geschilderte Konizität der Muffen-Abschnitte 31, 31' vom jeweiligen Einführ-Ende zum im Wesentlichen radial erstreckten Anschlag 34 wird verhindert, dass bei einer Druckbelastung auf den großen Seitenwand-Abschnitt 15 oder 15' des Rohres 26 bzw. 27 benachbart zur Muffe 28 das Spitzende 29 bzw. 29' benachbart zum Anschlag 34 bzw. der Mittel-Ebene 30 derart verformt wird, dass die Ring-Dichtung 32 von der Innenwand 33 des jeweiligen Muffen-Abschnitts 31, 31' abhebt. Durch die nach außen gekrümmte Ausgestaltung der großen Seitenwand-Abschnitte 15, 15' wird vermieden, dass sich bei einer solchen Druckbelastung der gegenüberliegende große Seitenwand-Abschnitt 15, 15', also die Auflagefläche des Rohres 26 bzw. 27, nach innen wölbt. Dadurch, dass auch in unbelastetem Zustand die kleinen Muffenwand-Abschnitte 37, 37' annähernd oder bevorzugt spaltfrei gegen die kleinen Seitenwand-Abschnitte 13, 13' anliegen, kann das Spitzende 29 bzw. 29' bei der angesprochenen Druckbelastung sich nicht in Richtung der kleinen Muffenwand-Abschnitte 37, 37' nach außen ausdehnen. Vielmehr werden die großen Seitenwand-Abschnitte 15, 15' nach außen aufgewölbt, da die kleinen Seitenwand-Abschnitte 13, 13' sich gegen die kleinen Muffenwand-Abschnitte 37, 37' der entsprechend stabilen Muffe 28 abstützen. Die Dichtwirkung wird also vergrößert, da die Ring-Dichtung 32 mit den großen Seitenwand-Abschnitten 15, 15' nach außen gedrückt wird.

Die geschilderte Ausgestaltung gilt gleichermaßen für so genannte WinkelStücke, die zwischen den beiden Muffen-Abschnitten 31, 31' eine Abbiegung aufweisen. Auch derartige Ausgestaltungen werden unter dem Begriff Muffe verstanden.

Weiterhin können Doppel-Steck-Muffen eingesetzt werden, die nur einen der geschilderten Muffen-Abschnitte 31 bzw. 31' aufweisen und deren anderer - nicht in der Zeichnung dargestellter - Muffen-Abschnitt zur Herstellung einer Verbindung zu einem normalen größeren oder kleineren Rohr ausgebildet ist.

Um ein unerwünschtes Lösen der Verbindung zwischen einem Verbundrohr 26 bzw. 27 zu vermeiden, kann in der Muffe eine Axialsicherung vorgesehen sein, die durch einen aus dem entsprechenden Muffen-Abschnitt 31 nach innen ausgeformten Widerhaken 43 gebildet ist, der an einer zugeordneten Flanke 8 anliegt. Beim Einschieben des Spitzendes 29 bzw. 29' wird dieser Widerhaken 43 radial nach außen ausgelenkt. Anschließend liegt er in dem zugeordneten Wellental 5 gegen die Flanke 8 an.

**Patentansprüche**

1. Bausatz zur Herstellung einer Verbindung eines ersten Verbundrohres (26) mit einem zweiten Rohr (27) mittels einer Muffe (28), wobei der Bausatz das erste verbundrohr (26) umfasst, wobei mindestens das erste Verbundrohr (26) ausgebildet ist,

- mit einem glatten Innenrohr (1),
- mit einem gewellten Außenrohr (2), das

-- Wellenberge (3, 4) und
-- jeweils zwischen einander unmittelbar benachbarten Wellenbergen (3, 4) Wellentäler (5) aufweist, die zum Innenrohr (1) durch die Wellenberge (3, 4) miteinander verbindende Wellenfüße (6) begrenzt sind, wobei die Wellenfüße (6) über den Umfang des Verbundrohres mit dem Innenrohr (1) verschweißt sind

- mit einander gegenüberliegenden großen Seitenwand-Abschnitten (15, 15'), von denen ein großer Seitenwand-Abschnitt (15) nach außen gekrümmt ausgebildet ist,
- mit die großen Seitenwand-Abschnitte (15, 15') miteinander verbindenden, einander gegenüberliegenden, nach außen gekrümmt ausgebildeten kleinen Seitenwand-Abschnitten (13, 13'),
- mit einer kleinen Achse (11), die die großen Seitenwand-Abschnitte (15, 15') durchdringt, wobei die kleinen Seitenwand-Abschnitte (13, 13') spiegelsymmetrisch zur kleinen Achse (11) angeordnet sind, und
- mit einer großen Achse (10), die die kleinen Seitenwand-Abschnitte (13, 13') durchdringt,
- wobei beide großen Seitenwand-Abschnitte (15, 15') gekrümmt ausgebildet, spiegelsymmetrisch zur großen Achse (10) angeordnet und jeweils symmetrisch zur kleinen Achse (11) ausgebildet sind,
- **dadurch gekennzeichnet, dass** die kleinen Seitenwand-Abschnitte (13, 13') und die großen Seitenwand-Abschnitte (15, 15') jeweils mittels eines Übergangs-Abschnitts (16, 16') miteinander verbunden sind
- dass der Bausatz die Muffe (28) umfasst,
- dass die Muffe (28) einen ersten und einen zweiten Muffen-Abschnitt (31, 31') aufweist,
- dass die Muffen-Abschnitte (31, 31') zur Einführung je eines Spitzendes (29, 29') des ersten Verbundrohres (26) bzw. des zweiten Rohres (27) jeweils ein Einführ-Ende aufweisen,
- dass mindestens der erste Muffen-Abschnitt (31) im Bereich des Einführ-Endes einen ersten Innen-Querschnitt aufweist, der dem Außen-Querschnitt des Spitzendes (29) des ersten Verbundrohres (26) zuzüglich eines umlaufenden Spaltes (36) mit einer Spaltbreite d1 entspricht, und
- dass mindestens der erste Muffen-Abschnitt (31) benachbart zu einem Einschub-Bereich (Anschlag 34) einen zweiten Innen-Querschnitt aufweist, der mit dem Außen-Querschnitt des Spitzendes (29) des ersten Verbundrohres (26) den Spalt (36) mit einer Spaltbreite d2 im Bereich der großen Seitenwand-Abschnitte (15, 15') und einer Spaltbreite d3 im Bereich der kleinen Seitenwand-Abschnitte (13, 13') begrenzt, wobei gilt:

$$d1 > d2 > d3.$$

2. Bausatz nach Anspruch 1, **dadurch gekennzeichnet,**
**dass** die Muffe (28) im Einschub-Bereich einen Anschlag (34) für mindestens ein Spitzende (29, 29') aufweist.

3. Bausatz nach Anspruch 1 oder 2, **dadurch gekennzeichnet,**
**dass** für die Spaltbreite d3 zwischen den kleinen Seitenwand-Abschnitten (13, 13') und den kleinen Muffenwand-Abschnitten (37, 37') benachbart zum Einschub-Bereich (30) jeweils gilt:
0,0mm <= d3 =< 0,2mm.

4. Bausatz nach einem der Ansprüche 1 bis 3, **dadurch gekennzeichnet, dass** für die Spaltbreite d2 zwischen den großen Seitenwand-Abschnitten (15, 15') und den großen Muffenwand-Abschnitten (38, 38') benachbart zum Einschub-Bereich (30) jeweils gilt:
0,4mm <= d2 <= 1,2mm.

5. Bausatz nach einem der Ansprüche 1 bis 4, **dadurch gekennzeichnet, dass** für die Breite d1 das Spaltes (36) zwischen dem Außenumfang jedes Spitzendes (29, 29') und der Innenwand (33) der Muffe (28) benachbart zum jeweiligen Einführ-Ende der Muffe (28) gilt:
0,5mm <= d1 <= 1,5mm.

6. Bausatz nach einem der Ansprüche 2 bis 5, **dadurch gekennzeichnet, dass** der Anschlag (34) radial nach innen in die Muffe (28) vorspringend ausgebildet ist,
dass der Anschlag (34) eine im Wesentlichen zylindrische innere Umfangsfläche (40) aufweist und
dass der Innendurchmesser D21 der Innenwand (21) des Verbundrohres (26, 27') und der Innendurchmesser D40 der Umfangs-Fläche (40) gleich sind.

7. Bausatz nach einem der Ansprüche 2 bis 6, **dadurch gekennzeichnet, dass** der Anschlag (34) mindestens eine Seitenwand (41, 41') zur Anlage eines Wellenfußes (6) des Spitzendes (29, 29') des mindestens einen Verbundrohres (26, 27) aufweist.

8. Bausatz nach einem der Ansprüche 1 bis 7, **dadurch gekennzeichnet, dass** jeder kleine Seitenwand-Abschnitt (13, 13') sich über einen Winkel $\alpha1$ erstreckt, für den gilt: 30° <= $\alpha1$ <= 140°.

9. Bausatz nach einem der Ansprüche 1 bis 8, **dadurch gekennzeichnet, dass** das Außenrohr (2) einen großen Außen-Durchmesser a1 und einen kleinen Außen-Durchmesser b1 aufweist, für die gilt: 1,5 <= a1/b1 <= 3,5.

10. Bausatz nach einem der Ansprüche 1 bis 9, **dadurch gekennzeichnet, dass** die kleinen Seitenwand-Abschnitte (13, 13') teilkreisförmig mit einem Krümmungsradius R1 ausgebildet und jeweils spiegelsymmetrisch zur großen Achse (10) ausgebildet sind.

11. Bausatz nach Anspruch 10, **dadurch gekennzeichnet,**
**dass** die großen Seitenwand-Abschnitte (15, 15') teilkreisförmig mit einem Krümmungsradius R2 ausgebildet sind, wobei für das Verhältnis der Krümmungsradien R1 und R2 gilt:
80 >= R2/R1 >= 8.

**Claims**

1. Kit for producing a connection of a first composite pipe (26) to a second pipe (27) by means of a sleeve (28), the kit comprising the first composite pipe (26), wherein at least the first composite pipe (26) is configured

   - with a smooth inner pipe (1),
   - with a corrugated outer pipe (2) which has

     -- corrugation crests (3, 4) and
     -- corrugation troughs (5) each located between corrugation crests (3, 4) directly adjacent to one another, which are bounded towards the inner pipe (1) by corrugation feet (6) connecting the corrugation crests (3, 4) to one another, the corrugation feet (6) being welded to the inner pipe (1) via the circumference of the composite pipe,

   - with large sidewall portions (15, 15') facing each other, of which one large sidewall portion (15) is configured as to be curved outwardly,
   - with small sidewall portions (13, 13') connecting the large sidewall portions (15, 15') to each other, facing each other and being configured as to be curved outwardly,
   - with a small axis (11) penetrating the large sidewall portions (15, 15'), the small sidewall portions (13, 13') being arranged mirror-symmetrically to the small axis (11), and
   - with a large axis (10) penetrating the small sidewall portions (13, 13'),
- wherein both large sidewall portions (15, 15') are configured as to be curved, are arranged mirror-symmetrically with respect to the large axis (10), and are configured symmetrically with respect to the small axis (11), respectively, **characterized in**
- **that** the small sidewall portions (13, 13') and the large sidewall portions (15, 15') are each connected to one another by means of a transition portion (16, 16'),
- **that** the kit comprises the sleeve (28),
- **that** the sleeve (28) has a first and a second sleeve portion (31, 31'),
- **that** the sleeve portions (31, 31') have an insertion end each for the insertion of a spigot end (29, 29') of the first composite pipe (26) and the second pipe (27), respectively,
- **that** at least the first sleeve portion (31), in the region of the insertion end, has a first inner cross section which corresponds to the outer cross section of the spigot end (29) of the first composite pipe (26) plus a circumferential gap (36) having a gap width d1, and
- **that** at least the first sleeve portion (31), adjacent to an insertion region (stop 34), has a second inner cross-section which, with the outer cross-section of the spigot end (29) of the first composite pipe (26), bounds the gap (36) with a gap width d2 in the region of the large sidewall portions (15, 15') and a gap width d3 in the region of the small sidewall portions (13, 13'), where:

$$d1 > d2 > d3.$$

2. Kit according to claim 1, **characterized in that** the sleeve (28) has a stop (34) for at least one spigot end (29, 29') in the insertion region.

3. Kit according to claim 1 or 2, **characterized in that** for the gap width d3 between the small side wall portions (13, 13') and the small sleeve wall portions (37, 37') adjacent to the insertion area (30), respectively:
0.0mm <= d3 =< 0.2mm.

4. Kit according to any one of claims 1 to 3, **characterized in that** for the gap width d2 between the large side wall portions (15, 15') and the large sleeve wall portions (38, 38') adjacent to the insertion region (30) in each case:
0.4mm <= d2 <= 1.2mm.

5. Kit according to any one of claims 1 to 4, **characterized in**

**that** for the width d1 of the gap (36) between the outer circumference of each spigot end (29, 29') and the inner wall (33) of the sleeve (28) adjacent to the respective insertion end of the sleeve (28):
0.5mm <= d1 <= 1.5mm.

6. Kit according to any one of claims 2 to 5, **characterized in**
**that** the stop (34) is configured as to project radially inwardly into the sleeve (28),
**that** the stop (34) has a substantially cylindrical inner circumferential surface (40), and
**that** the inner diameter D21 of the inner wall (21) of the composite pipe (26, 27') and the inner diameter D40 of the circumferential surface (40) are equal.

7. Kit according to any one of claims 2 to 6, **characterized in**
**that** the stop (34) has at least one side wall (41, 41') for abutting a corrugation foot (6) of the spigot end (29, 29') of the at least one composite tube (26, 27).

8. Kit according to any one of claims 1 to 7, **characterized in**
**that** each small sidewall portion (13, 13') extends via an angle $\alpha 1$ for which: 30° <= $\alpha 1$ <= 140°.

9. Kit according to any one of claims 1 to 8, **characterized in that** the outer pipe (2) has a large outer diameter a1 and a small outer diameter b1, where:
1.5 <= a1/b1 <= 3.5.

10. Kit according to any one of claims 1 to 9, **characterized in**
**that** the small side wall portions (13, 13') are configured in a part-circle shape with a radius of curvature R1 and are each configured mirror-symmetrically to the large axis (10).

11. Kit according to claim 10, **characterized in that** the large sidewall portions (15, 15') are configured in a part-circle shape with a radius of curvature R2, wherein the ratio of the radii of curvature R1 and R2 is
80 >= R2/R1 >= 8.

**Revendications**

1. Ensemble pour établir un raccord entre un premier tuyau composite (26) et un deuxième tuyau (27) au moyen d'un manchon (28), dans lequel l'ensemble comprend le premier tuyau composite (26), dans lequel au moins le premier tuyau composite (26) est conçu

- avec un tuyau intérieur lisse (1),
- avec un tuyau extérieur ondulé (2) qui a

-- des crêtes d'ondulation (3, 4) et
-- des creux d'ondulation (5) entre des crêtes d'ondulation directement adjacents l'un à l'autre, qui sont délimités vers le tuyau intérieur (1) par des pieds d'ondulation (6) reliant les crêtes d'ondulation (3, 4) entre eux, les pieds d'ondulation (6) étant soudés au tuyau intérieur (1) sur la circonférence du tuyau composite,

- avec des grandes sections de parois latérales opposées (15, 15') dont une grande section de paroi latérale (15) est formée de manière courbée vers l'extérieur,
- avec des petites sections de parois latérales (13, 13') reliant les grandes sections de parois latérales (15, 15') entre elles, lesdites petites sections de parois latérales (13, 13') étant formées de manière à être courbées vers l'extérieur et se faisant face,
- avec un petit axe (11) passant par lesdites grandes sections de parois latérales (15, 15'), lesdites petites sections de parois latérales (13, 13') étant disposées en symétrie miroir par rapport audit petit axe (11), et
- avec un grand axe (10) passant par les petites sections des parois latérales (13, 13'),
- les deux grandes sections de parois latérales (15, 15') étant courbées, disposées en symétrie miroir par rapport au grand axe (10) et chacune conçue en symétrie par rapport au petit axe (11), **caractérisé en ce**
- **que** les petites sections de parois latérales (13, 13') et les grandes sections de parois latérales (15, 15') sont chacune reliées entre elles par une section de transition (16, 16'),
- **que** l'ensemble comprend le manchon (28),
- **que** le manchon (28) comporte une première et une deuxième section de manchon (31, 31'),
- **que** les sections de manchon (31, 31') ont une extrémité d'insertion pour insérer respectivement un embout pointu (29, 29') du premier tuyau composite (26) ou du deuxième tuyau (27),
- **qu'**au moins la première section de manchon (31), dans la zone de l'extrémité d'insertion, présente une première section transversale intérieure qui correspond à la section transversale extérieure de l'embout pointu (29) du premier tuyau composite (26) plus une fente circonférentielle (36) d'une largeur de fente dl, et
- **qu'**au moins la première section de manchon (31), à côté d'une zone d'insertion (butée 34), présente une deuxième section transversale intérieure qui, avec la section transversale extérieure de l'embout pointu (29) du premier tuyau composite (26), délimite la fente (36) avec une largeur de fente d2 dans la zone des grandes sections de parois latérales (15, 15') et une largeur de fente d3 dans la zone des petites sections de parois latérales (13, 13'), où :

$$d1 > d2 > d3.$$

2. Ensemble selon la revendication 1, **caractérisé en ce**
**que** le manchon (28) comporte une butée (34) pour au moins un embout pointu (29, 29') dans la zone d'insertion.

3. Ensemble selon la revendication 1 ou 2, **caractérisé en ce**
**que** pour la largeur de fente d3 entre les petites sections de parois latérales (13, 13') et les petites sections de paroi de manchon (37, 37') adjacentes à la zone d'insertion (30), respectivement :
0,0mm <= d3 =< 0,2mm.

4. Ensemble selon l'une quelconque des revendications 1 à 3, **caractérisé en ce**
**que** pour la largeur de fente d2 entre les grandes sections de parois latérales (15, 15') et les grandes sections de parois de manchon (38, 38') adjacentes à la zone d'insertion (30), respectivement :
0,4mm <= d2 <= 1,2mm.

5. Ensemble selon l'une quelconque des revendications 1 à 4, **caractérisé en ce**
**que** pour la largeur d1 de fente (36) entre la circonférence extérieure de chaque embout pointu (29, 29') et la paroi intérieure (33) du manchon (28) adjacente à l'extrémité d'insertion respective du manchon (28) :
0,5mm <= d1 <= 1,5mm.

6. Ensemble selon l'une quelconque des revendications 2 à 5, **caractérisé en ce**
**que** la butée (34) est conçue pour faire saillie radialement vers l'intérieur dans le manchon (28),
**que** la butée (34) présente une surface périphérique intérieure sensiblement cylindrique (40), et
**que** le diamètre intérieur D21 de la paroi intérieure (21) du tuyau composite (26, 27') et le diamètre intérieur D40 de la surface périphérique (40) sont égaux.

7. Ensemble selon l'une quelconque des revendications 2 à 6, **caractérisé en ce**
**que** la butée (34) comporte au moins une paroi latérale (41, 41') pour l'appui contre un pied d'ondulation (6) de l'embout pointu (29, 29') de l'au moins un tuyau composite (26, 27).

8. Ensemble selon l'une quelconque des revendications 1 à 7, **caractérisé en ce que** chaque petite section de paroi latérale (13, 13') s'étend sur un angle $\alpha 1$ où : $30° <= \alpha 1 <= 140°$.

9. Ensemble selon l'une quelconque des revendications 1 à 8, **caractérisé en ce que** le tuyau extérieur (2) a un grand diamètre extérieur a1 et un petit diamètre extérieur b1, où : $1,5 <= a1/b1 <= 3,5$.

10. Ensemble selon l'une quelconque des revendications 1 à 9, **caractérisé en ce que** les petites sections de parois latérales (13, 13') ont la forme d'un cercle partiel avec un rayon de courbure R1 et sont formées en symétrie miroir par rapport au grand axe (10), respectivement.

11. Ensemble selon la revendication 10, **caractérisé en ce que** les grandes sections des parois latérales (15, 15') sont constituées en forme de cercle partiel avec un rayon de courbure R2, le rapport des rayons de courbure R1 et R2 étant comme suit : $80 >= R2/R1 >= 8$.

Fig.1

Fig.2

Fig.3

Fig.4

Fig.5

Fig.6

Fig.7

Fig.8

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2431642 A
- EP 2620683 A1
- EP 2233850 A1
- EP 2161486 A1
- EP 0563575 A
- EP 1143183 A3